# EUROPEAN PATENT APPLICATION

(11) **EP 4 598 145 A1**
(43) Date of publication of application: **06.08.2025**
(21) Application number: 23872928.9
(22) Date of filing: 20.09.2023
(51) Int. Cl.: H04W 52/02, H04L 5/00, H04W 72/23, H04L 1/18

(54) **METHOD AND APPARATUS FOR CONFIGURING RESOURCES IN WIRELESS COMMUNICATION SYSTEM**

(30) Priority: 29.09.2022 KR 20220124766
(71) Applicant: LG Electronics Inc., Yeongdeungpo-gu Seoul 07336 (KR)
(72) Inventor: CHOI, Seunghwan, Seoul 06772 (KR); KIM, Seonwook, Seoul 06772 (KR); LEE, Youngdae, Seoul 06772 (KR); YANG, Suckchel, Seoul 06772 (KR)
(74) Representative: Mooser, Sebastian Thomas
(86) International application number: PCT/KR2023/014258
(87) International publication number: WO 2024/071810

(57) **Abstract**

A method and an apparatus for configuring resources in a wireless communication system, disclosed in the present specification, can dynamically change the value of a timer configured for S cell deactivation.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a method of efficiently configuring resources in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for configuring resources in a wireless communication system.

In an aspect of the present disclosure, provided herein is a method of configuring radio resources by a user equipment (UE) in a wireless communication system. The method includes: activating a secondary cell (SCell); and starting a timer related to deactivation of the SCell based on a first value for expiration of the timer.

The method includes: receiving information for changing the first value to a second value; determining the expiration of the timer based on the second value; and deactivating the SCell based on the expiration of the timer.

In another aspect of the present disclosure, provided herein are an apparatus, processor, and storage medium configured to perform the resource configuration method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, when resources for wireless signal transmission and reception are configured, there is an advantage of enabling more efficient resource usage through operations differentiated from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is diagrams illustrating methods for transmitting and receiving a signal according to the embodiments of the present disclosure.
FIGS. 5 to 8 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR
- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

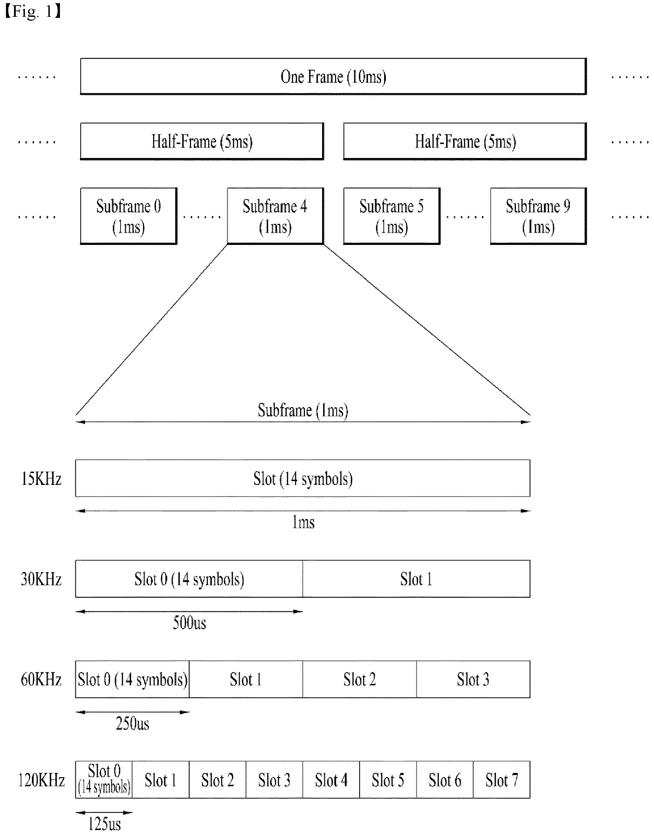

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

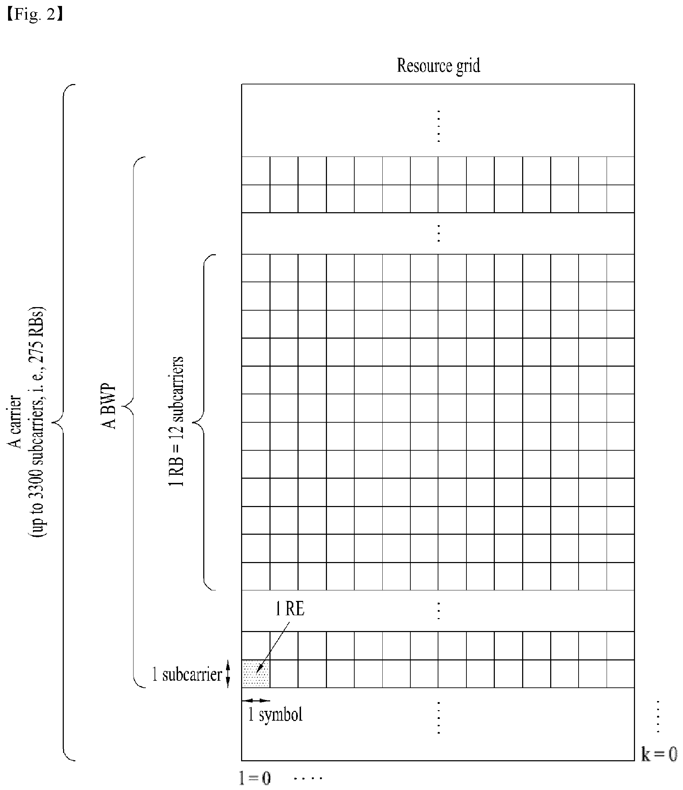

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

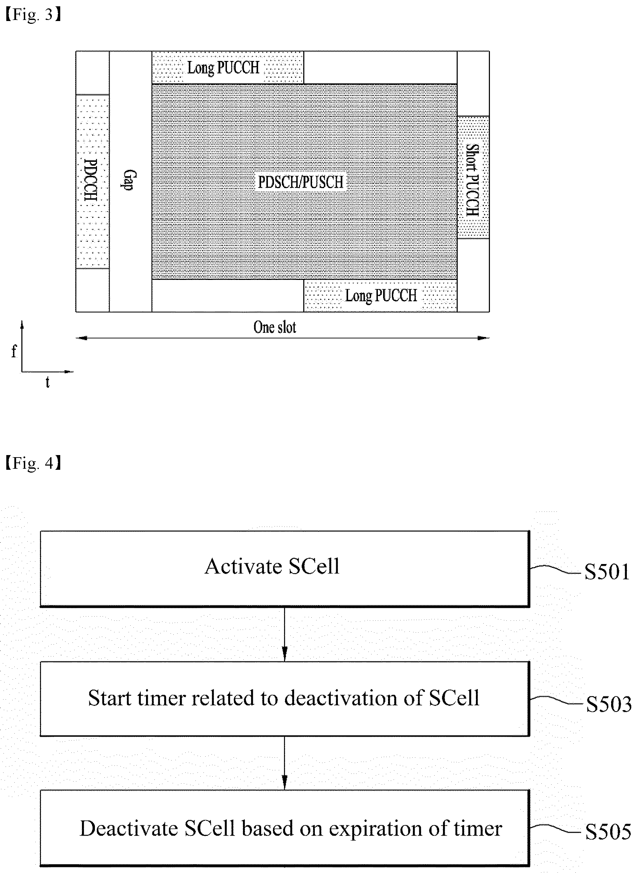

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### Resource Configuration in Network Energy Saving (NES) Mode

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

For energy saving at the BS, a network energy saving (NES) mode (i.e., a mode for energy saving at the BS) may be defined. A BS operating in the NES mode may reduce the power consumption thereof by suspending (holding) DL or UL transmission for a specific period or limiting transmission and reception operations in specific frequency bands. In the present disclosure, the NES mode may refer to the operational mode of the BS and/or UE that is defined/configured/indicated for such a purpose. Additionally, in the present disclosure, the operational mode of the UE (or cell) where the NES mode (or NES-based configuration) is not configured is referred to as non-NES mode to distinguish the operational mode from the NES mode.

The NES mode may be maintained only for a specific time period. In the proposals described later, a time period during which the BS operates in the NES mode is referred to as a NES duration. The NES mode may be valid only for specific frequency resources. In the proposals described later, frequency resources corresponding to the NES mode are referred to as an NES band.

The NES mode may be configured by the BS through separate higher layer signaling or higher layer configurations. Alternatively, the NES mode may be dynamically configured to the BS/UE through other control channels (e.g., DCI-based indication) or data channels (e.g., PDSCH, PUSCH). During the NES mode, the BS may turn on/off specific time, frequency, antenna resources, etc., and may not transmit/receive related data channels, control channels, or control signals. During the NES mode, the UE may operate by expecting that specific time/frequency/antenna resources will be turned on/off and that related channels/signals will not be transmitted.

A BWP for the NES mode (NES-BWP) may be defined/configured for UE having defined/configured the NES mode. The NES-BWP may be set as a separate BWP that operates only in the NES mode. In this case, a BWP for the non NES mode may not be defined or deactivated. Alternatively, a specific (single) BWP may be configured differently for the NES mode and non-NES mode. For example, a specific BWP may be set as the NES-BWP during the NES duration and set as a different BWP during other durations. The configuration methods and constraints of the NES-BWP may be defined/configured separately from the conventional BWP. For example, in the NES-BWP, PDCCH monitoring may not be performed, but aperiodic CSI-RS signals and reports may be configured. As another example, the periodicity of a periodic CSI-RS may be reinterpreted in the NES-BWP.

A unique BWP switching operation in the NES mode may be defined. For example, in the conventional BWP switching configuration/operation, when a BWP other than the default BWP is the active BWP, a timer is set. If the timer expires, the current active BWP is switched to inactive, and the default BWP reverts to the new active BWP. On the other hand, in the NES mode, if the timer expires, the current active BWP may be switched to inactive, and the dormant BWP or NES-BWP may switch to the new active BWP. Alternatively, if the timer expires, the current active BWP may switch to inactive, and the default BWP may switch to the new active BWP (as in the conventional operation). If no DL/UL transmission is scheduled/configured in the default BWP for a certain period, the default BWP may switch to inactive, and the dormant BWP or NES-BWP may switch to the new active BWP.

The proposed methods described later may be applied independently under the conditions described for each method or configured only during the NES duration. Alternatively, the methods may be applied only in the NES band.

In the proposed methods described later, operating in the non-NES mode means arbitrary NR configurations/operations that are not configured for NES (e.g., configurations/operations specified in Rel-15, Rel-16, or Rel-17 NR specifications). In the proposed methods described later, an operation of switching to the NES mode may only be applied to UEs/cells configured for NES. Additionally, the NES mode is not limited to specific configurations or operational methods. That is, the NES mode may be any configuration or operational method defined/configured for NES. In the proposed methods described later, switching to the NES mode may also be understood as switching to the NES-BWP.

In the proposed methods described later, the expression "a specific parameter (or operation) is configured" may be understood as meaning that the parameter (or operation) is configured for an arbitrary cell, for a specific UE, for a configured cell of a specific UE, for a configured DL (or UL) BWP of a specific cell, or for an active DL (or UL) BWP of a specific cell.

For convenience of explanation, in the present disclosure, a DL BWP and/or UL BWP may be simply referred to as a BWP. Unless otherwise specified, the DL BWP and/or UL BWP may refer to a BWP (configured for the UE) or an active BWP (among configured BWPs). [59]

In the proposed method described later, a MAC control element (CE) or DCI (e.g., a MAC CE or DCI triggering BWP switching or configuring/activating/deactivating specific operations) may be transmitted in a UE-specific, UE group-common, or cell-specific manner. The DCI may be scrambled with an RNTI configured in a UE-specific, UE group-common, or cell-specific manner and then transmitted. The MAC CE may be transmitted over a PDSCH scheduled by DCI scrambled with an RNTI configured in a UE-specific, UE group-common, or cell-specific manner.

### [1] SCell activation/deactivation for NES mode

[1-1] The SCell activation/deactivation configurations and/or operations supported in conventional Rel-15/16/17 may be defined/configured separately for the NES mode, which are different from those for the conventional mode.

### Specifically,

- Method 1: In the NES mode, the SCell activation/deactivation configurations/operations may be changed according to the proposed methods, which will be described later. In this case, the methods for RRC configurations, MAC-CE commands, and/or DCI indications for SCell activation/deactivation may be the same as those in conventional Rel-17.
- Method 2: In the NES mode, the SCell activation/deactivation may be configured/indicated separately according to the proposed methods described later (unlike conventional Rel-17). In this case, the SCell activation/deactivation may be configured/indicated through separate RRC configurations, MAC-CE commands, and/or DCI indications.

[1-2] In [1-1], the NES mode may refer to a NES duration in the time domain, a NES band (or NES BWP) in the frequency domain, or the NES mode in the time and frequency domains, which is explicitly configured.

### [2] SCell activation/deactivation configuration methods for NES mode

[2-1] In Rel-17, SCell activation may be configured and/or indicated through a MAC-CE or may occur when specific conditions are met during the SCell configuration (i.e., if an SCell is configured with sCellState set to activated upon SCell configuration). Once the SCell is activated, an active DL (or UL) BWP may be determined as a DL (or UL) BWP with the ID firstActiveDownlinkBWP-Id (or firstActiveUplinkBWP-Id).

For the UE configured with the NES mode, when the SCell is activated (through the same indication or procedure as above), a BWP set as a NES-BWP for DL (or UL) may be activated. In other words, the UE may configure/define the active DL (or UL) BWP of the activated SCell to be the NES-BWP.
- In this case, the NES-BWP may be a DL (or UL) BWP separately configured for the NES mode. Alternatively, one of the DL (or UL) BWPs configured for the non-NES mode may be set as the NES-BWP.

For the UE configured with the NES mode, the active DL (or UL) BWP may be configured differently when the SCell is activated in an NES mode duration and when the SCell is activated in a non-NES mode duration. For example, when the SCell is activated in the non-NES mode duration, a DL (or UL) BWP indicated by firstActiveDownlinkBWP-Id (or firstActiveUplinkBWP-Id) configured to the UE may become the active BWP. When the SCell is activated in the NES mode duration, a separate BWP (e.g., NES BWP) may become the active BWP (as mentioned above).

Similarly, for the UE configured with the NES mode, the active DL (or UL) BWP may be configured differently when a specific BWP is switched from a dormant BWP to a non-dormant BWP in the NES mode duration and when the specific BWP is switched from the dormant BWP to the non-dormant BWP in the non-NES mode duration. For example, when the SCell is activated in the non-NES mode duration, a DL (or UL) BWP indicated by firstOutsideActiveTimeBWP-Id (or firstWithinActiveTimeBWP-Id) configured to the UE may become the active BWP. When the specific BWP is switched from the dormant BWP to the non-dormant BWP in the NES mode duration, a separate BWP (e.g., NES BWP) may be activated.

[2-2] When the SCell is activated, the UE may start (or restart) a timer to change the corresponding SCell to a deactivated state. The timer value configured through sCellDeactivationTimer for each SCell may be one of the following: {20 msec, 40 msec, 80 msec, 160 msec, ..., 1280 msec}. When the timer expires, the corresponding SCell may be changed to the deactivated state. The timer value mentioned above may be the starting value for the timer. The UE may determine that the timer has expired once a time corresponding to the timer value has passed from the moment the timer is (re)started.

The minimum configurable timer value is 20 msec. Since the values have a minimum interval of 20 msec, if different timer values are configured for multiple SCells, the times at which the SCells are deactivated may differ. For example, when timer values of 20ms and 40ms are configured for two SCells (e.g., cell#1 and cell#2), if the timer for cell#2 is (re)started and exactly 20 ms later, the timer for cell#1 is (re)started, cell#1 and cell#2 may be changed to the deactivated state simultaneously. In other cases, cell#1 and cell#2 may not be deactivated simultaneously.

For the UE configured with the NES mode, methods of dynamically changing such a timer value may be defined and/or configured. In this case, a MAC-CE command or DCI indication (for activating an SCell) may be used to change the timer value. Specifically, one of the following methods may be applied.
- Method 1: If a MAC-CE (or DCI) to change a timer value is not configured, a timer value (T1) configured via RRC may be applied as a timer (re)start value for the corresponding SCell. However, if a different timer value (T2) is configured and/or indicated through a MAC-CE (or DCI), T2 may be applied as the timer (re)start value for the corresponding SCell.
   ■ When T2 is configured/indicated, T2 may be used (temporarily) only once for the timer (re)start, and thereafter, T1 may be used when the timer is (re)started.
   ■ Alternatively, when T2 is configured/indicated, the value of T2 may remain in use until the timer value is changed again through a MAC-CE (or DCI) or configured through an RRC (re)configuration.
- Method 2: When a timer value (i.e., T2) different from T1 is configured and/or indicated through a MAC-CE (or DCI), the timer is not restarted, and the current value of the timer may be immediately changed to T2. For example, when T2 is indicated and the current value of the timer is x, the timer value may be changed to T2. This means that the expiration time of the timer may decrease by "x - T2" (if x > T2) or the expiration time of the timer may increase by "T2 - x" (if x < T2).
- Method 3: When a timer value (i.e., T3) different from T1 is configured and/or indicated through a MAC-CE (or DCI), the timer is not restarted, and the current value of the timer may increase or decrease by T1 - T3. For example, when T3 is indicated and the current timer value is x, the timer value may be changed to x - (T1 - T3). That is, the timer may operate as if the timer had (re)started with the timer value of T3. If x - (T1 - T3) < 0, the current timer value may be set to 0, which may cause the timer to expire immediately. In other words, when T3 is indicated and the current timer value is x, the timer value may be changed to max{0, x - (T1 - T3)}.

The timer value that may be configured/indicated through a MAC-CE (or DCI) in Methods 1/2 are determined as follows.
- Opt 1: The timer value may be one of the candidate values that may be configured through sCellDeactivationTimer.
- Opt 2: The timer value may be one of the candidate values that may be configured through sCellDeactivationTimer. In this case, the timer value may be one of the values less than (or equal to) a value configured for the corresponding SCell via RRC.
- Opt 3: The timer value may be one of the candidate values that may be configured through sCellDeactivationTimer, as well as another specific value.

[2-3] In Rel-17, SCell deactivation may occur when deactivation is configured and/or indicated through a MAC-CE or when sCellDeactivationTimer expires. When the SCell is deactivated, (any) DL (or SPS DL) signals/channels and (any) type-2 CG signals/channels configured for the SCell are cleared. As a result, when the SCell is reactivated, the configured DL and/or type-2 CG are (re)initialized. On the other hand, when the SCell is deactivated, (any) type-1 CG configured for the SCell is suspended, and when the SCell is reactivated, the type-1 CG configured for the SCell is resumed.

For the UE configured with the NES mode, the configured DL (or SPS DL) and/or type-2 CG may be suspended without being cleared. Even if the SCell is deactivated, information configured for the configured DL and/or type-2 CG is not cleared (similar to the configured type-1 CG). When the SCell is reactivated, the configured DL and/or type-2 CG may be resumed based on the previously configured information. Accordingly, the UE configured with the NES mode may skip the step of reinitializing the configurations of the configured DL and/or type-2 CG when the SCell is deactivated and then reactivated.

- In this method, if the SCell remains in the deactivated state for a specific period of time after the configured DL and/or type-2 CG are suspended, the configured DL and/or type-2 CG may be cleared (similar to the case of conventional SCell deactivation). The specific period of time may be configured through separate RRC signaling, DCI, MAC-CE, or MAC-CE for deactivating the cell.

[2-4] When the SCell is deactivated, all hybrid automatic repeat request (HARQ) (related) buffers of the SCell are flushed. However, for the UE configured with the NES mode, it may be configured (through RRC signaling, a MAC-CE, or DCI) that the HARQ (related) buffers are not flushed when the SCell is deactivated. For the UE configured with the NES mode, one of the following options may be applied.
- Opt 1: The HARQ buffers may be configured not to be flushed when all SCells are deactivated.
- Opt 2: The HARQ buffers may be configured not to be flushed when SCell deactivation occurs (or is triggered) during an NES duration (e.g., time period operating in the NES mode).
- Opt 3: When an SCell configured with a NES BWP (or including the NES BWP) is deactivated, the HARQ buffers may be configured not to be flushed.
- Opt 4: When an SCell is deactivated for NES purposes, The HARQ buffers may be configured not to be flushed during the deactivation.
- Opt 5: an SCell for which the HARQ buffers are to be flushed (are not to be flushed) among SCells to be deactivated may be configured/indicated through a MAC-CE (or DCI) for deactivating the SCell.

Whether the above options are applied may be configured through separate RRC signaling.

For the SCell for which the HARQ buffers are not to be flushed during deactivation, new HARQ data generated/determined after the SCell is (re)activated may not be flushed into the HARQ buffers but may be processed (e.g., averaged, combined) with the remaining data.

In this method, the HARQ (related) buffers that are not flushed and are retained may be configured to be flushed if the SCell remains in the deactivated state for a specific period of time (similar to the case of conventional SCell deactivation). The specific period of time may be configured through separate RRC signaling, DCI, a MAC-CE, or a MAC-CE for deactivating the cell.

[2-5] For the UE configured with the NES mode, it may be configured (through RRC signaling, a MAC-CE, or DCI) that when the SCell is deactivated, PUSCH resources for semi-persistent (SP) CSI reporting for the SCell may not be released or cleared. For the UE configured with the NES mode, one of the following options may be applied.
- Opt 1: When all SCells are deactivated, the PUSCH resources for SP CSI reporting may be configured not to be released.
- Opt 2: It may be configured that when SCell deactivation occurs (or is triggered) during an NES duration (e.g., time period operating in the NES mode), the PUSCH resources for SP CSI reporting may be configured not to be released.
- Opt 3: When an SCell configured with a NES BWP (or including the NES BWP) is deactivated, the PUSCH resources for SP CSI reporting may be configured not to be released.
- Opt 4: When an SCell is deactivated for NES purposes, the PUSCH resources for SP CSI reporting may be configured not to be released during the deactivation.
- Opt 5: An SCell for which the PUSCH resources for SP CSI reporting are to be released (are not to be released) among SCells to be deactivated may be configured/indicated through a MAC-CE (or DCI) for deactivating the SCell.

Whether the above options are applied may be configured through separate RRC signaling.

When the method is configured, the PUSCH resources that are not released in the deactivated state may be for SP CSI reporting (without (re)initialization).

In this method, the PUSCH resources that are retained and not released may be configured to be released if the SCell remains in the deactivated state for a specific period of time (similar to the case of conventional SCell deactivation). The specific period of time may be configured through separate RRC signaling, DCI, a MAC-CE, or a MAC-CE for deactivating the cell.

[2-6] For the UE configured with the NES mode, when the SCell is deactivated, whether CSI measurement is required for the SCell may be configured/indicated (through RRC signaling, a MAC-CE, or DCI). For example,
- When the SCell is deactivated, the CSI measurement for the cell (or on the cell) may be configured not to be performed. In this case, the CSI measurement may be for radio link monitoring (RLM) or radio resource management (RRM).
- When the SCell is deactivated, a CSI-RS may be configured not to be transmitted from the cell. In this case, the CSI-RS may be a signal for RLM or RRM.

For the UE configured with the NES mode, one of the following options may be applied.
- Opt 1: When all SCells are deactivated, whether CSI measurement (or CSI RS transmission/reception) is performed may be configured.
- Opt 2: When SCell deactivation occurs (or is triggered) during an NES duration (e.g., time period operating in the NES mode), whether CSI measurement (or CSI RS transmission/reception) is performed may be configured.
- Opt 3: When an SCell configured with a NES BWP (or including the NES BWP) is deactivated, whether CSI measurement (or CSI RS transmission/reception) is performed may be configured.
- Opt 4: When an SCell is deactivated for NES purposes, whether CSI measurement (or CSI RS transmission/reception) is performed may be configured during the deactivation.
- Opt 5: An SCell where CSI measurement or CSI-RS transmission/reception is allowed (or prohibited) among SCells to be deactivated may be configured/indicated through a MAC-CE (or DCI) for deactivating the SCell.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

FIG. 4 is a flowchart illustrating a resource configuration method according to embodiments of the present disclosure.

Referring to FIG. 4, the resource configuration method according to the embodiments of the present disclosure may include: activating an SCell (S501); starting a timer related to deactivation of the SCell (S503); and deactivating the SCell based on the expiration of the timer (S505). In addition to the operations in FIG. 4, at least one of the operations described in Sections [1] and [2] may be performed.

As a specific example, according to Section [2-2], the value of the timer may be dynamically changed. If the value for the expiration of the timer is a first value (T1), information for changing the first value to a second value (T2 or T3) may be received after the start of the timer (after S503). The first value may be configured by sCellDeactivationTimer, which is an RRC parameter configured along with the SCell configuration. The second value (or related information) may be dynamically received through a MAC CE or DCI, rather than sCellDeactivationTimer. Upon receiving the information for changing the first value to the second value, the UE determines the expiration of the timer based on the second value and deactivates the SCell when the timer expires (S505).

More specifically, according to Method 1 of Section [2-2], if the timer is restarted after the UE receives the information for changing the first value to the second value, the UE uses the second value to determine the expiration of the timer. According to Method 2 of Section [2-2], even if the timer is not restarted, the UE changes the value for determining the expiration of the timer from the first value to the second value, and then determines the expiration of the timer based on the current value of the timer. According to Method 3 of Section [2-3], even if the timer is not restarted, the UE may change the current timer value based on the received information, thereby achieving the same effect as if the value for determining the expiration of the timer is changed.

According to Section [2-3], even if the SCell is deactivated, SPS PDSCH resources and/or type-CG PUSCH resources configured for the SCell are not released and are suspended. The suspended resources may be resumed for use when the SCell is reactivated. According to Section [2-5], PUSCH resources for SP CSI reporting may not be released even if the SCell is deactivated.

According to Section [2-4], even if the SCell is deactivated, HARQ buffers related to the SCell may not be flushed. When the SCell is reactivated, data in the non-flushed HARQ buffers may be used for transmission.

According to Section [2-6], even if the SCell is deactivated, CSI measurement for the SCell may be performed.

In addition to the operations described with reference to FIG. 4, one or more of the operations described with reference to FIGS. 1 to 3 and/or in Sections [1] and [2] may be combined and further performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

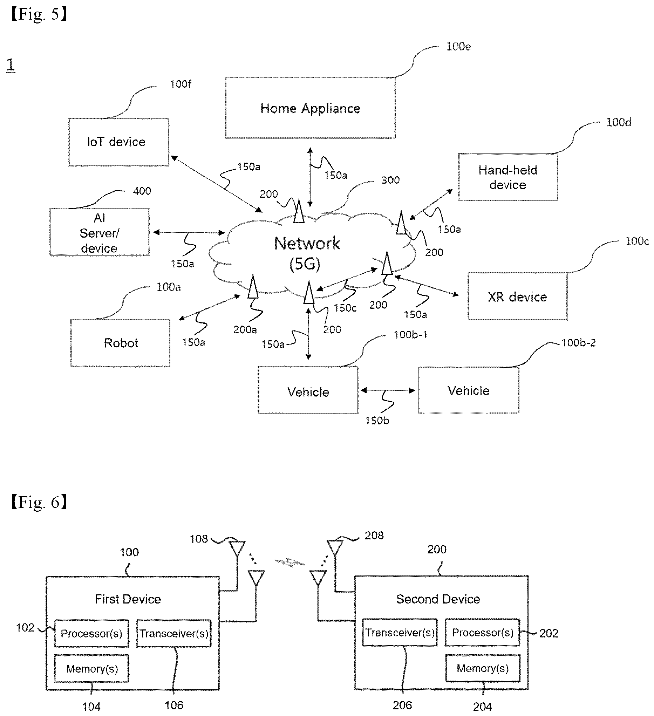

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

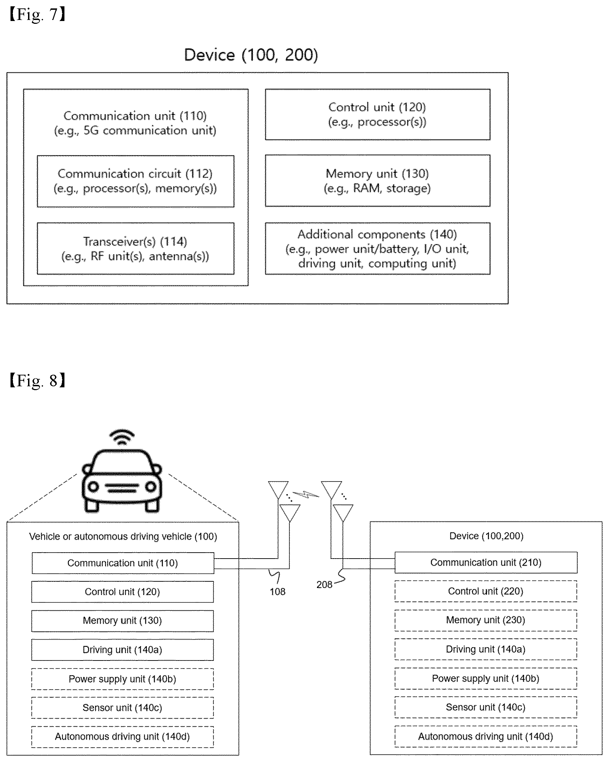

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of configuring radio resources by a user equipment (UE) in a wireless communication system, the method comprising:
activating a secondary cell (SCell);
starting a timer related to deactivation of the SCell based on a first value for expiration of the timer;
receiving information for changing the first value to a second value;
determining the expiration of the timer based on the second value; and
deactivating the SCell based on the expiration of the timer.

2. The method of claim 1, wherein the first value is received through radio resource control (RRC) signaling.

3. The method of claim 1, wherein the information is received through a medium access control (MAC) control element (CE) or downlink control information (DCI).

4. The method of claim 1, wherein the second value is used after a restart of the timer.

5. The method of claim 1, wherein based on the reception of the information, a value for the expiration of the timer is changed from the first value to the second value without a restart of the timer.

6. The method of claim 1, wherein periodic resources configured for the SCell are not released despite the deactivation of the SCell.

7. The method of claim 6, where the periodic resources comprise:
resources for a semi-persistent (SPS) physical downlink shared channel (PDSCH);
resources for a Type-2 configured grant (CG) physical uplink shared channel (PUSCH); or
PUSCH resources for semi-persistent (SP) channel state information (CSI) reporting.

8. The method of claim 1, wherein a hybrid automatic repeat request (HARQ) buffer related to the SCell is not flushed despite the deactivation of the SCell.

9. The method of claim 1, further comprising measuring channel state information (CSI) for the SCell despite the deactivation of the SCell.

10. A user equipment (UE) configured to configure radio resources in a wireless communication system, the UE comprising:
at least one transceiver;
at least one processor; and
at least one memory operably connected to the at least one processor and storing instructions that, when executed, cause the at least one processor to perform specific operations comprising:
activating a secondary cell (SCell);
starting a timer related to deactivation of the SCell based on a first value for expiration of the timer;
receiving information for changing the first value to a second value;
determining the expiration of the timer based on the second value; and
deactivating the SCell based on the expiration of the timer.

11. An apparatus for a user equipment (UE), the apparatus comprising:
at least one processor; and
at least one computer memory operably connected to the at least one processor and configured to, when executed, cause the at least one processor to perform operations comprising:
activating a secondary cell (SCell);
starting a timer related to deactivation of the SCell based on a first value for expiration of the timer;
receiving information for changing the first value to a second value;
determining the expiration of the timer based on the second value; and
deactivating the SCell based on the expiration of the timer.

12. A computer-readable non-volatile storage medium comprising at least one computer program configured to cause a user equipment (UE) having at least one processor to perform operations comprising:
activating a secondary cell (SCell);
starting a timer related to deactivation of the SCell based on a first value for expiration of the timer;
receiving information for changing the first value to a second value;
determining the expiration of the timer based on the second value; and
deactivating the SCell based on the expiration of the timer.
